# EUROPEAN PATENT SPECIFICATION

(11) **EP 4 347 671 B1**
(45) Date of publication and mention of the grant of the patent: **12.02.2025**
(21) Application number: 22730200.7
(22) Date of filing: 23.05.2022
(51) Int. Cl.: C08F 220/06, C09D 133/06

(54) **HYDROXYALKYLAMIDE-BASED COATING COMPOSITIONS**
BESCHICHTUNGSZUSAMMENSETZUNGEN AUF DER BASIS VON HYDROXYALKYLAMID
COMPOSITIONS DE REVÊTEMENT À BASE D'HYDROXYALKYLAMIDE

(30) Priority: 27.05.2021 EP 21176319
(43) Date of publication of application: 10.04.2024
(73) Proprietor: BASF Coatings GmbH, 48165 Münster (DE)
(72) Inventor: HOEVELMANN, Claas Henrik, 48165 Münster (DE); MITTAG, Friederike, 48165 Münster (DE); VOLLMANN, Dominik, 48165 Münster (DE); BOSHE-PLOIS, Stefanie, 48165 Münster (DE); NIEMEIER, Manuela, 48165 Münster (DE); POTH, Ulrich, deceased (DE)
(74) Representative: BASF IP Association
(86) International application number: PCT/EP2022/063828
(87) International publication number: WO 2022/248376

(56) References cited:
- WO-A1-2017/194464
- WO-A2-2011/057781
- US-B2- 6 670 043

## Description

The invention relates to coating compositions comprising carboxyl group containing poly(meth)acrylates and hydroxyalkylamide-based crosslinking agents, a method to produce such coating compositions as well as coating methods making use of the coating compositions to produce thus coated substrates.

### TECHNOLOGICAL BACKGROUND

In general, commercial coating compositions can be subsumed under physically drying and chemically crosslinking coating compositions. Amongst the chemically crosslinking coating composition it is distinguished between radiation curable coating compositions, where crosslinking is initiated by means of radiation, such as UV radiation and thermally curable coating compositions, where crosslinking is typically achieved by self-crosslinking of preferably polymeric entities and crosslinking of polymers carrying functional groups with so-called crosslinking agents carrying functional groups, which react with the functional groups of the afore-mentioned polymers, thus forming a cured, i.e., crosslinked coating.

The present invention belongs to the field of thermally crosslinking coating compositions of the latter type, where essentially polymeric entities are crosslinked with crosslinking agents.

In most prior art compositions, the polymeric binders carry hydroxyl groups, while the crosslinking agents belong to the group of free or blocked diisocyanates and/or polyisocyanates or to the group of aminoplast resins such as melamine-formaldehyde resins. Both types of crosslinkers have several drawbacks such as the need of relatively high crosslinking temperatures in case of blocked polyisocyanates and aminoplast resins, or the use of specific, in many cases environmentally problematic catalysts is required to obtain lower crosslinking temperatures.

In some cases, aminoplast resins are used in particularly physically drying coating compositions. However, in such compositions they merely act as flexibilizers and are not particularly involved in chemical crosslinking.

Furthermore, aminoplast resins based on formaldehyde resins may tend to liberate formaldehyde, which is highly undesirable due to the health hazard associated with free formaldehyde.

Further, some crosslinking agents, particularly free diisocyanates and free polyisocyanates are in most cases not suitable for use in aqueous systems, since free isocyanate groups tend to react with water under formation of carbon dioxide, which is associated with detrimental effects on the coating quality. Moreover, such coating compositions are typically not storage stable due to the same reasons. Moreover, many free diisocyanates have a low vapor pressure, qualifying them to cause environmental and health problems.

Rather uncommon are thermally crosslinkable combinations of functional binders, which are based on the reaction between beta-hydroxyalkylamides and carboxyl-functional binders.

However, for example, WO 2019/078925 A1 discloses beverage and food can coatings based on acid functional acrylic binders made by polymerizing acidic monomers, multi-ethylenically unsaturated monomers and optionally styrene. Preferably such binders have rather low acid numbers. For crosslinking, nitrogen-containing carboxyl-reactive crosslinking agents are used amongst which beta-hydroxyalkylurea and beta-hydroxylamides are mentioned. However, the compositions disclosed in WO 2019/078925 A1 rather aim to provide beverage and food compliant coatings substituting bisphenol-A-based coating materials. Thus, the requirements on such coatings strongly differ from coatings, which are based on isocyanate and aminoplast crosslinking chemistry as to be provided by the present invention and which are typically employed as automotive coatings or part of automotive multilayer coatings.

WO2011/057781 discloses a coating composition comprising a copolymer of styrene, 2-ethylhexyl acrylate, methacrylic acid and hydroxypropyl methacrylate, having an acid number of 136 mg KOH/g and a crosslinking agent being bis [N,N-di (β-hydroxy-ethyl)] adipamide or bis [N,N-di (β-hydroxy-propyl)] adipamide. The resin is at lest partially neutralized.

The coating composition is applied on an aluminum substrate which has been previously phosphor-chromed and curing the coating layer at 204°C for 3 minutes.

WO2017/194464 discloses a coating composition comprising an ethylene acrylic acid copolymer having an acid value of 200 mg KOH/g (A-C 5180 from Example 1) and bis [N,N-di (β-hydroxy-ethyl)] adipamide (PRIMID XL 552). The coating is used for food and beverage containers.

US 6 670 043 discloses a coating composition comprising a methacrylic acid containing polymer and bis [N,N-di (β-hydroxy-ethyl)] adipamide used in automotive coatings.

### AIMS OF THE INVENTION

Beside the replacement of isocyanate and aminoplast crosslinking agents for curing carboxyl-functional polymers the main aims of the present invention are to provide coating compositions having a high-storage stability, preferably in combination with a low curing temperature and even more preferred without the use of environmentally problematic catalysts. The resulting coatings are aimed to have a high gloss, hardness and solvent-resistance. Preferably the coatings should be suitable for automotive coating and have an excellent adhesion to the substrates to be coated as well as to any subsequent coating layers, if applied. Furthermore, the crosslinkable binder/crosslinking agent systems should be suitable in both, coating compositions based on water and those based on organic solvents, and they should be particularly suitable in automotive coating, particularly as basecoats and/or clear coats.

### SUMMARY

The above aims were achieved by providing a coating composition, comprising
(A) one or more carboxyl group containing poly(meth)acrylic polymers having an acid number in the range from 120 to 500 mg KOH/g, the acid number being calculated for the non-neutralized form of the one or more poly(meth)acrylic polymers, the one or more poly(meth)acrylic polymers optionally being at least partially neutralized; and
(B) one or more compounds of formula (I) 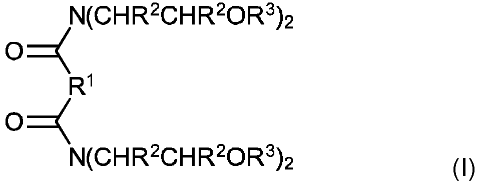 having on average at least 2 hydroxyl groups; wherein
   residues R¹ are independently of each other (CH₂)ₙ with n = 2, 3 or 4;
   residues R² are independently of each other H or CH₃; and
   residues R³ are independently of each other selected from H and (O=C)-R¹-(C=O)-R⁴, wherein residues R⁴ are independently of each selected from OH, OR^{a}, wherein R^{a} being a linear or branched alkyl group with 1 to 4 carbon atoms, preferably an alkyl group with 1 or 2 carbon atoms and N(CHR²CHR²OH)₂.

The term "(meth)acrylic" encompasses acrylic and methacrylic. Thus, a poly(meth)acrylic polymer may contain acrylic monomers, methacrylic monomers or both in polymerized form. A "poly(meth)acrylic polymer" may, however, contain further non-acrylic monomers in polymerized form such as e.g., styrene monomers or other vinyl-functional monomers.

The afore-mentioned coating compositions and any preferred embodiments thereof are denoted as "coating compositions according to the invention".

Further object of the present invention is a method for producing said coating composition according to the invention, comprising the step of homogeneously mixing the ingredients of the coating composition of the present invention.

Further object of the present invention the use of the coating compositions according to the present invention as basecoat compositions and/or clear coat compositions in automotive coating.

This method and any preferred embodiments thereof are denoted in the following as "methods for producing the coating compositions according to the invention".

Another object of the invention is a method of coating a substrate with the coating composition of the present invention, comprising the steps of
(i) applying the coating composition according to the invention onto a substrate to form a coating layer; and
(ii) curing the thus formed coating layer at a temperature in the range from 130 °C to 180 °C.

This method and any preferred embodiments thereof are denoted in the following as "methods of coating a substrate according to the invention".

Yet further objects of the present invention are substrates coated with the coating composition according to the invention or obtainable according to the method of coating a substrate according to the invention, multilayer-coated substrates and multilayer coatings, wherein at least one coating layer is formed from the coating composition according to the invention.

The thus monolayer-coated or multilayer-coated substrates are denoted in the following as a "coated substrates according to the invention".

### DETAILLED DESCRIPTION

In the following, the present invention will be further described, and preferred features and embodiments are disclosed.

### Coating Composition

Essential ingredients of the coating compositions of the present invention are (A) the one or more specific carboxyl group containing poly(meth)acrylic polymers and (B) the one or more compounds of formula (I). Preferably, the coating compositions of the present invention contain at least one liquid carrier selected from the group consisting of water and organic solvents. Further ingredients of the coating compositions of the present invention are allowed, insofar as they do not contravene the aim to avoid crosslinkers from the group of diisocyanates, polyisocyanates or aminoplast resins, which are consequently not contained in the coating compositions of the present invention. Further ingredients may be additional polymeric binders, but also colorants such as dyes and/or pigments, fillers, typical coating additives and catalysts.

### Carboxylic Group Containing Poly(meth)acrylic Polymers (A)

The carboxylic group containing poly(meth)acrylic polymers (also denoted herein as carboxylic group containing poly(meth)acrylates or binder (A)) are preferably linear, non-branched polymers. Therefore, they are preferably solely produced from mono-ethylenically unsaturated monomers. Preferably, the only ethylenically unsaturated group in such monomers is a (meth)acrylate group or a vinyl group.

The carboxylic group containing poly(meth)acrylic polymers possess an acid number of 120 to 500 mg KOH/g, which is determined as described in the experimental part of the present invention. Preferably the acid number is from about 125 to 400 mg KOH/g, more preferred from 135 to 300 mg KOH/g and even more preferred from 145 to 250 mg KOH/g such as 155 to 230 mg KOH/g or 165 to 215 mg KOH/g.

The acid number results from the carboxylic acid group content of the polymers which again preferably results from the incorporation of acrylic acid and/or methacrylic acid in the monomer mixture used to produce the polymers.

The carboxylic group containing poly(meth)acrylic polymers (A) can be prepared by any polymerization method making use of ethylenically unsaturated monomers known to one of skill in the art such as a radical polymerization method.

Preferably, the monomer mixture used to produce the carboxylic group containing poly(meth)acrylic polymers (A) comprises monomers having formula (M)

H_{2C}=CHR⁵_{-R}⁶ (M)

wherein
R⁵ stands for H or CH₃; and
some residues R⁶ stand for an aryl group with 6 to 12 carbon atoms, preferably 6 to 10 carbon atoms, preferably a phenyl or methylated phenyl group, some residues R⁶ stand for residue COOR⁷, wherein some residues R⁷ stand for H, and some residues R⁷ stand for an alkyl group with 1 to 12 carbon atoms, even more preferred an alkyl group with 1 to 10 or 1 to 8 carbon atoms.

In the present invention the term "alkyl groups" encompasses linear, branched and cyclic alkyl groups, linear or branched alkyl groups being preferred.

Preferably, the monomer mixture used to produce the carboxylic group containing poly(meth)acrylic polymers (A), comprises
25 to 70 mol-%, more preferred 30 to 65 mol-% of one or more of the monomers of formula (M) wherein R⁶ = COOH;
5 to 45 mol-%, more preferred 8 to 40 mol-% of one or more of the monomers of formula (M) wherein R⁶ = aryl, preferably phenyl; and
20 to 65 mol-%, more preferred 25 to 60 mol-% of one or more of the monomers of formula (M) wherein R⁶ = COOR⁷, wherein R⁷ stands for an alkyl group with 1 to 12 carbon atoms, preferably 1 to 10 or 1 to 8 carbon atoms;
all percentages based on the total number of polymerized monomers present in the carboxylic group containing poly(meth)acrylic polymers (A).

The carboxylic group containing poly(meth)acrylic polymers (A) may further comprise further mono-ethylenically unsaturated monomers which differ from the above monomers (M) are present in the polymer, the percentage values being based on the total number of polymerized monomers present in the carboxylic group containing poly(meth)acrylic polymers (A).

Such monomers, which differ from monomers (M), preferably are monomers of formula (M')

H₂C=CHR⁸-R⁹ (M')

wherein
R³ stands for H or CH₃; and
R⁹ stands for a group selected from COOR¹⁰ or CONR¹¹R¹², wherein
R¹⁰ is a hydroxyalkyl group containing 2 to 8 carbon atoms, preferably 2 to 4 carbon atoms or an aminoalkyl group containing 2 to 8 carbon atoms, preferably 2 to 4 carbon atoms, and
R¹¹ and R¹² independently of each other stand for H or alkyl groups containing 1 to 8 carbon atoms, preferably 1 to 4 carbon atoms.

However, other carboxyl group containing mono-ethylenically unsaturated monomers differing from monomers (M) may also be incorporated in the carboxylic group containing poly(meth)acrylic polymers (A) such as maleic acid and/or its anhydride. However, particularly preferred as carboxyl group containing monomers are still acrylic acid and methacrylic acid, where methacrylic acid being even more preferred.

Particularly preferred the carboxylic group containing poly(meth)acrylic polymers (A) have a hydroxyl number in the range from 0 to 100 mg KOH/g, more preferred from 0 to 50 mg KOH/g and most preferred the carboxylic group containing poly(meth)acrylic polymers (A) do not contain hydroxyl groups.

Particularly preferred the carboxylic group containing poly(meth)acrylic polymers (A) do not contain aminoalkyl group containing monomers.

Most preferably, no monomers of formula (M') are contained in the monomer mixture used to produce the carboxylic group containing poly(meth)acrylic polymers (A).

In all of the above cases of formulae (M) and (M'), wherein the monomer contains a (meth)acrylic group, methacrylic monomers are preferred over acrylic monomers.

Preferably, the glass transition temperature (T_{g}) of the poly(meth)acrylic polymers (A), is in the range from -30 and 150 °C, more preferably in the range from 0 and 140 °C, even further preferred in the range from 30 to 130 °C. The glass transition temperature is determined as described in the method section of the invention.

The poly(meth)acrylic polymers (A) preferably have number average molecular weights Mₙ in the range from 1,000 and 20,000 Daltons, more preferred in the range from 3,000 and 12,000 Daltons; and weight average molecular weights M_{w} in the range from 3,000 and 30,000 Daltons, more preferred in the range from 8,000 and 25,000 Daltons, in each case measured as described in the method section of the invention.

### Compounds (B) of Formula (I)

The coating compositions of the present invention contain one or more compounds of formula (I) 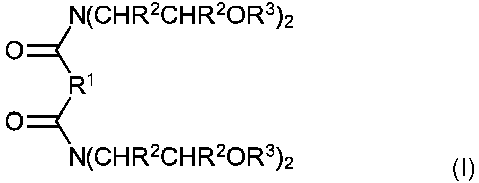 having on average at least 2 hydroxyl groups; wherein
residues R¹ are independently of each other (CH₂)ₙ with n = 2, 3 or 4;
residues R² are independently of each other H or CH₃; and
residues R³ are independently of each other selected from H and (O=C)-R¹-(C=O)-R⁴, wherein residues R⁴ are independently of each selected from OH, OR^{a}, wherein R^{a} being a linear or branched alkyl group with 1 to 4 carbon atoms, preferably an alkyl group with 1 or 2 carbon atoms and N(CHR²CHR²OH)₂.

The compounds of formula (I) herein are also being referred to as binder (B).

Even though COOH groups (i.e., groups (C=O)-R⁴ with R⁴ being OH) formally contain a OH moiety, such OH moieties are not considered to be hydroxyl groups, which is in accordance with the general definition of hydroxyl groups as used in chemistry.

Preferably, the compounds of formula (I) contain on average at least 3 and even more preferred at least 4 hydroxyl groups and preferably a maximum of 10 or even more preferred 8 hydroxyl groups.

Preferably, residues R³ are independently selected from the group of residues consisting of H, (O=C)-R¹-(C=O)-N(CH₂CH₂OH)₂ and (O=C)-R¹-(C=O)-N(CH₂CH(CH₃)OH)₂, even more preferred residues R³ are selected from the group of residues consisting of H and (O=C)-R¹-(C=O)-N(CH₂CH₂OH)₂.

Preferably, at least one of residues R³ is H and even more preferred at least 2 residues R³ are H.

Preferably, mixtures of compounds of formula (I) are employed in the coating compositions of the present invention. In such mixtures residues R¹ preferably contain moieties (CH₂)ₙ with at least two, preferably three different values of n selected from 2, 3 and 4.

Such mixtures of compounds of formula (I) as described in the preceding paragraph are preferably obtained by reacting dibasic esters with the respective di(hydroxyalkyl)amines such as diethanolamine. The term "dibasic ester" (DBE) is used in chemistry for the mixture of dimethylesters of glutaric, succinic and adipic acid, preferably comprising 55 to 67 wt.-% of the dimethylester of glutaric acid, 15 to 25 wt.-% of the dimethylester of succinic acid and 10 to 25 wt.-% of the dimethylester of adipic acid.

### Liquid Carrier Media / Solvents (S)

The coating compositions of the present invention can be aqueous coating compositions or solvent-based coating compositions.

In case the coating composition of the present invention is an aqueous coating composition, in addition to water as the main liquid carrier medium, the composition may also comprise organic solvents in amounts being typical of those found in common aqueous coating compositions. In aqueous coating compositions, the content of water, based on the weight of the volatile content of the compositions is preferably at least 60 wt.-%, more preferred at least 70 wt.-% and most preferred at least 80 wt.-%.

In case the coating composition of the present invention is a solvent-based coating composition, the main liquid carrier medium is an organic solvent or preferably a mixture of organic solvents. In solvent-based coating compositions, the content of water, based on the weight of the volatile content of the compositions is preferably less than 10 wt.-%, more preferred less than 5 wt.-% and even more preferred less than 2 wt.-%. Most preferred the water content of the solvent-based coating composition is less than 0.5 wt.-% based on the weight of the volatile content of the coating composition.

Preferred organic solvents belong to the group of esters, such as butyl acetate; ethers such as butyl glycol, butyl diglycol and methoxy propanol; and ketones such as methyl ethyl ketone. Amongst the aforementioned solvents, hydroxy functional solvents, particularly monohydroxy-functional ethers, such as monohydroxy-functional glycol ethers are preferred. The organic solvents can be used in combination and also in combination with water in aqueous coating compositions as well as in solvent-based coating compositions.

The term "volatile content" as used herein is the difference between the non-volatile content (i.e., the solids content) and the weight of the coating composition, whereby the non-volatile content is determined by drying approx. 1 g of the coating composition at a temperature of 130 °C for 60 min. The percentual loss of weight is defined to be the volatile content.

### Further Components (C)

The coating composition of the present invention may contain further ingredients such as one or more further polymeric binders (C1) and/or one or more commonly used coatings additives (C2) and/or one or more colorants (C3) as further component (C) depending on the desired application. Except for the pigments and fillers and the volatile solvents, the additives remain in the cured coating therefore also belong to the binders of the coating composition, besides binders (A) and (B).

Therefore, the term "binder" as used in the context of the invention encompasses the solids content of the coating compositions of the present invention minus the optional content of pigments and fillers employed therein. Thus, the binder content of a pigment-free and filler-free coating composition equals the non-volatile content of the coating composition.

### Further Polymeric Binders (C1)

Beside the binders being subsumed under (A) the carboxylic group containing poly(meth)acrylic polymers and binders being subsumed under (B) the compounds of formula (I) and the coating additives (C2) (as described below) further binders (C1) may be contained in the coating compositions.

Further binders (C1) are preferably polymeric binders which are selected from the group of physically drying polymeric binders, self-crosslinking polymeric binders and externally crosslinkable polymeric binders. While self-crosslinking polymeric binders and externally crosslinkable polymeric binders mandatorily possess crosslinkable functional groups, this is optional for the physically drying binders. Self-crosslinking polymeric binders possess groups which are reactive to each other, typically at an elevated temperature. Externally-crosslinkable polymeric binders possess functional groups which are reactive towards functional groups of a crosslinking agent. Such functional groups are preferably selected from the group consisting of hydroxyl groups, thiol groups, primary and secondary amino groups, carboxyl groups and carbamate groups.

The types of further polymeric binders (C1) are preferably selected from the group consisting of poly(meth)acrylic polymers which differ from the poly(meth)acrylic polymers (A), polyurethanes, polyureas, polyesters and polyethers and mixed polymers of the afore-mentioned polymers. Mixed polymers can e.g., be polyether-polyesters; or polyether chains and/or polyester chains comprising polyurethanes and the like. Any of these polymers or mixed polymers can carry one or more of the afore-mentioned functional groups, which is particularly preferred if the further binders (C1) are self-crosslinking polymeric binders or externally crosslinkable polymeric binders.

### Coatings Additives (C2)

The coating composition may comprise at least one additive selected from the group consisting of reactive diluents, light stabilizers, antioxidants, defoamers differing from those in the aqueous titanium dioxide slurry of the present invention, emulsifiers, slip additives, polymerization inhibitors, initiators for free-radical polymerizations, adhesion promoters, film-forming auxiliaries, dispersants, levelling agents, rheology control agents, sag-control agents (SCA), flame retardants, corrosion inhibitors, siccatives, biocides and matting agents. Further examples of suitable coatings additives are e.g., described in the textbook "Lackadditive" ("Additives for Coatings" by Johan Bieleman, Wiley-VCH, Weinheim, 1998). The additives can be used in the known and customary amounts.

Preferably, their total content, based on the total weight of the coating composition of the invention ranges from 0.01 to 10 wt.-%, more preferably 0.05 to 5 wt.-%, particularly preferably 0.1 to 3.0 wt.-%.

### Colorants (C3), such as Pigments, Fillers and Dyes

The coating compositions according to the present invention may contain pigments. Such pigments are preferably coloring pigments and/or effect pigments.

The terms "coloring pigment" and "color pigment" are interchangeable and include colored, black and white pigments. As a color pigment inorganic and/or organic pigments can be used.

Examples of white pigments are titanium dioxide, zinc white, zinc sulfide and lithopone. Examples of black pigments are carbon black, iron manganese black and spinel black. Examples of pigments with other colors are chromium oxide, chromium oxide hydrate green, cobalt green, ultramarine green, cobalt blue, ultramarine blue, manganese blue, ultramarine violet, cobalt and manganese violet, iron oxide red, cadmium sulfoselenide, molybdate red and ultramarine red, iron oxide brown, mixed brown, spinel and corundum phases and chromium orange, iron oxide yellow, nickel titanium yellow, chrome titanium yellow, cadmium sulfide, cadmium zinc sulfide, chrome yellow and bismuth vanadate.

Amongst the effect pigments, particularly metal effect pigments such as aluminum pigments and/or pearlescent effect pigments may be comprised in the coating composition according to the invention.

The term "filler" is known to the person skilled in the art, for example from DIN 55943 (date: October 2001). For the purposes of the present invention, a "filler" is understood as meaning a substance which is essentially insoluble in the application medium, for example the coating composition according to the invention and which is used in particular for increasing the volume. In the context of the present invention, "fillers" preferably differ from "pigments" by their refractive index, which is ≤ 1.7 for fillers, but > 1.7 for pigments. Examples of suitable fillers are kaolin, dolomite, calcite, chalk, calcium sulfate, barium sulfate, talc, silica, in particular pyrogenic silica, hydroxides such as aluminum hydroxide or magnesium hydroxide; in addition, reference is made to Römpp Lexikon Lacke und Druckfarben, Georg Thieme Verlag, 1998, pages 250 ff., "Fillers".

Dyes are colorants which are soluble in the coating composition.

### Total Solids content

The total solids content of all nonvolatile components (i.e., the solids content as defined and determined according to the procedure as disclosed above; 130 °C, 60 min, approx. 1 g sample) is preferably in the range from 15 to 60 % by weight, more preferably 20 to 50 % by weight and most preferred 25 to 45 % by weight, based on the total weight of the coating composition of the invention.

### Amounts and Ratios of Components in the Coating Compositions

In the coating compositions of the present invention, the amount of
(A)the one or more carboxylic group containing poly(meth)acrylic polymers as defined above preferably ranges from 12 to 37 wt.-%, more preferred from 15 to 30 wt.-% and most preferred from 20 to 26 wt.-%
(B) the one or more compounds of formula (I) as defined above preferably ranges from 3 to 12 wt.-%, more preferred from 4 to 10 wt.-% and most preferred from 5 to 8 wt.-%,
the weight percentage values being based on the total weight of the coating composition.

The molar ratio of carboxyl groups contained in the (A) one or more carboxylic group containing poly(meth)acrylic polymers to the hydroxyl groups in the (B) one or more compounds of formula (I) is preferably from 1.5:1 to 1:1.25, more preferred from 1.25:1 to 1:1.1 and most preferred 1:1. The afore-mentioned ratios are preferred, if no further polymeric binders (C1) are used in the coating compositions of the present invention or if the amount of further polymeric binders (C1) is less than about 25 wt.-%, more preferred less than about 15 wt.-% and most preferred less than about 10 wt.-%, based on the total weight of the coating composition.

### Method for Producing the Coating Compositions According to the Invention

The coating compositions according to the present invention can be prepared by simply mixing the ingredients. Both, the main binders (A) and (B), but most preferred binder (A) are employed in pre-dissolved form, i.e., in water, solvents or mixtures of both. Any further ingredients such as ingredients (C) or additional solvents present in the liquid carrier medium can be added at any stage. However, in case pigments and/or fillers are employed, it is preferred to add these in form of a mill base or grinding paste to ensure a homogenous mixture of all ingredients. Any type of mixers and dissolvers typically used in coating preparation may be used.

### Use of the Coating Compositions According to the Invention

The coating compositions according to the invention are suitable for use in many areas of coating, particularly in automotive coating where extraordinarily high quality standards are to be met. The coating compositions according to the present invention are particularly suitable as basecoat compositions and clear coat compositions in automotive coatings. Therefore, they can be used to form one or more layers in a multilayer coating, preferably in a multilayer coating on an untreated (i.e., bare); or a pretreated and/or pre-coated metallic substrate.

### Method of Coating a Substrate and an accordingly Coated Substrate

A further object of the present invention is a method of coating a substrate with the coating compositions according to the invention, the method comprising applying the coating composition according to the present invention onto a substrate to form a coating layer and curing the coating layer at a temperature in the range from about 130 °C to about 180 °C for preferably about 10 to about 40 minutes. Further object of the present invention are coated substrates, which are obtainable by the method of coating according to the invention.

The coating compositions of the invention can be coated by any of several techniques well known in the art. These include, for example, spray coating, dip coating, roll coating, curtain coating, knife coating, spreading, pouring, dipping, impregnating, trickling or rolling, and the like. For automotive body panels, spray coating is typically used. Preference is given to employing spray application methods, such as compressed-air spraying, airless spraying, high-speed rotation, electrostatic spray application, alone or in conjunction with hot spray application such as hot-air spraying, for example.

The coating compositions and coating systems of the invention are employed in particular in the technologically and esthetically particularly demanding field of automotive OEM finishing. The coating compositions can be used in both single-stage and multistage coating methods.

The applied coating compositions can be cured after a certain rest time or "flash" period. The rest time serves, for example, for the leveling and devolatilization of the coating films or for the evaporation of volatile ingredients such as solvents. The rest time may be assisted or shortened by the application of elevated temperatures or by a reduced humidity, provided this does not entail any damage or alteration to the coating films, such as premature crosslinking, for instance.

The thermal curing, i.e., the thermal crosslinking of the coating compositions has no peculiarities in terms of method but instead takes place in accordance with the typical, known methods such as heating in a forced-air oven or irradiation with IR lamps. The thermal cure may also take place in stages. Another preferred curing method is that of curing with near infrared (NIR) radiation.

Generally, heat curing is affected by exposing the coated article to elevated temperatures provided primarily by radiative heat sources. After application, the applied coating layer is cured, for example with heat at temperatures from above 130 °C to 180 °C, or from 135 to 170 °C, or from 140 to 160 °C, for a time of 10 min up to 40 min, and more preferably 15 min up to 30 min.

The layer thicknesses of the cured layers of the coating composition according to the present invention formed on substrates are preferably as follows. If the coating composition according to the present invention is used to form a basecoat layer, the layer thickness is preferably from about 8 to about 25 µm, more preferred from about 9 to about 20 µm and most preferred from about 10 to about 15 µm. If the coating composition according to the present invention is used to form a clearcoat layer, the layer thickness is preferably from about 20 to about 60 µm, more preferred from about 30 to about 55 µm and most preferred from about 35 to about 50 µm.

Preferably, the substrate materials are chosen from the group consisting of metals, polymers, wood, glass, mineral-based materials and composites of any of the afore-mentioned materials.

The term metal comprises metallic elements like iron, aluminum, zinc, copper and the like as well as alloys such as steel like bare steel, cold-rolled steel, galvanized steel and the like. Polymers can be thermoplastic, duroplastic or elastomeric polymers, duroplastic and thermoplastic polymers being preferred. Mineral-based materials encompass materials such as e.g., hardened cement and concrete. Composite materials are e.g., fiber-reinforced polymers etc.

Of course, it is possible to use pre-treated substrates, where the pre-treatment regularly depends on the chemical nature of the substrate.

Preferably, the substrates are cleaned before use, e.g., to remove dust, fats, oils or other substances which typically prevent a good adhesion of coatings. The substrate can further be treated with adhesion promoters to increase the adhesion of subsequent coatings.

Metallic substrates may comprise a so-called conversion coat layer (e.g., a zinc phosphating layer) and/or electrodeposition coat layer before being coated with the coating composition according to the present invention. This is particularly the case for substrates in the automotive coating field such as automotive OEM and automotive refinish coating.

The electrodeposition composition used to form the electrodeposition coat layer can be any electrodeposition composition used in automotive vehicle coating operations. Non-limiting examples of electrocoat compositions include electrocoating compositions sold by BASF. Electrodeposition coating baths usually comprise an aqueous dispersion or emulsion including a principal film-forming epoxy resin having ionic stabilization (e.g., salted amine groups) in water or a mixture of water and organic cosolvent. Emulsified with the principal film-forming resin is a crosslinking agent that can react with functional groups on the principal resin under appropriate conditions, such as with the application of heat, and so cure the coating. Suitable examples of crosslinking agents include, without limitation, blocked polyisocyanates. The electrodeposition coating compositions usually include one or more pigments, catalysts, plasticizers, coalescing aids, antifoaming aids, flow control agents, wetting agents, surfactants, UV absorbers, HALS compounds, antioxidants, and other additives.

The electrodeposition coating composition is preferably applied to a dry film thickness of 10 to 35 µm. After application, the coated vehicle body is removed from the bath and rinsed with deionized water. The coating may be cured under appropriate conditions, for example by baking at from about 135 °C to about 190 °C for preferably about 15 to about 60 minutes.

For polymeric substrates pretreatment may include, for example, treatment with fluorine, or a plasma, corona or flame treatment. Often the surface is also sanded and/or polished. The cleaning can also be done manually by wiping with solvents with or without previous grinding or by means of common automated procedures, such as carbon dioxide cleaning.

Any of the above substrates can also be pre-coated with one or more filler coating compositions and/or one or more basecoat compositions prior to the formation of the coating layer. Such filler coating compositions and basecoat compositions may contain color pigments and/or effect pigments such as metallic effect pigments as e.g., aluminum pigments; or pearlescent pigments as e.g., mica pigments. This is particularly the case for substrates in the automotive coating field such as automotive OEM and automotive refinish coating.

Depending on the substrate material chosen, the coating compositions can be applied in a wide variety of different application areas. Many kinds of substrates can be coated. The coating compositions of the invention are therefore outstandingly suitable for use as decorative and protective coating systems, particularly for bodies of means of transport (especially motor vehicles, such as motorcycles, buses, trucks or automobiles) or parts thereof. The substrates preferably comprise a multilayer coating as used in automotive coating.

Accordingly, a further object of the present invention is a substrate coated according to the inventive method of coating. The coating on the substrate can be cured or uncured, preferably being cured.

### Multilayer Coatings and Multilayer-coated Substrates

Yet another object of the present invention is a multilayer coating, which can be cured or uncured, preferably being cured, consisting of at least two coating layers, at least one of which is formed from a coating composition according to the present invention. Typically, the multilayer coating comprises more than two coating layers.

A preferred multilayer coating comprises at least one pigment and/or filler containing layer, such as a primer coat layer, filler coat layer or a base coat layer; and at least one clear coat layer.

The coating compositions of the present invention preferably form the basecoat and/or clearcoat layer, the clearcoat layer preferably being the most outer coat layer (i.e., top coat layer).

Even more preferred is a multilayer coating comprising at least one filler coat layer, coated with at least one base coat layer, which again is coated with at least one clear coat layer.

Particularly, but not limited to automotive coating a multilayer coating preferably comprises an electro coat layer, at least one filler coat layer on top of the electro coat layer, coated with at least one base coat layer, which again is coated with at least one clear coat layer. Preferably, at least one basecoat layer and/or at least one clearcoat layer is formed from the coating composition according to the invention.

The above multilayer coatings can be applied to any of the substrates named above, typically, but not limited to pretreated substrates. Therefore, another object of the present invention is a multilayer-coated substrate, coated with any of the above multilayer coatings, the multilayer coating being cured or uncured, preferably being cured. The substrate preferably being any of the herein aforementioned substrates, preferably an untreated, pretreated, precoated or pretreated and precoated substrate.

### EXAMPLES

In the following the manufacture of poly(meth)acrylates (A), dibasic ester-based beta-hydroxyalkylamide crosslinkers (B), the coating compositions and coatings is shown by means of working examples and comparative examples. Unless specified otherwise, parts are parts by weight and percentages are percentages by weight.

### Preparation of the Poly(meth)acrylate (A)

### Preparation of a Carboxylic Group Containing Poly(meth)acrylate (A1)

A 5-Liter stainless steel reactor equipped with a reflux condenser and an overhead stirrer is charged with 515 g butyl acetate. The solvent is heated to 125 °C and a feed of 73 g tert-butylperoxy-2-ethylhexanoate in 73 g butyl acetate is added over the cause of 4.75 hours. 15 minutes after starting the feed a second feed of styrene (510 g), butyl methacrylate (190 g), acrylic acid (340 g), methyl methacrylate (300 g) and butyl acrylate (67 g) is started over the cause of 4 h. The temperature is maintained for another hour after completion of the addition feeds. The resin is cooled to room temperature.

The resulting carboxylic group containing poly(meth)acrylate obtained is found in Table 1 and denoted as A1.

### Preparation of an Aqueous Carboxylic Group Containing Poly(meth)acrylate (A2)

A 5-Liter stainless steel reactor equipped with a reflux condenser and an overhead stirrer is charged with 460 g butoxyethanol. The solvent is heated to 120 °C and a feed of 115 g tert-butylperoxy-2-ethylhexanoate in 115 g butoxyethanol is added over the cause of 4.5 hours. 15 minutes after starting the feed a second feed of styrene (230 g), 2-ethylhexylacrylate (462 g), methacrylic acid (670 g), methyl methacrylate (440 g) and butyl methacrylate (510 g) is started over the cause of 4 h. The temperature is maintained for another hour after completion of the addition feeds. The reaction is cooled to 100 °C and 1.6 kg of the resin is removed. The remaining resin is cooled further to 60 °C and a mixture of 185 g N,N-dimethylethanolamine in 1575 g water is added to reactor over the course of 30 min, stirring is continued for another 30 min.

The resulting carboxylic group containing poly(meth)acrylate obtained is found in Table 1 and denoted as A2.

### Preparation of an Aqueous Carboxylic Group Containing Poly(meth)acrylate (A3)

A 5-Liter stainless steel reactor equipped with a reflux condenser and an overhead stirrer is charged with 450 g 2-butanone. The solvent is heated to 75 °C and a feed of 45 g tert-butylperoxy-2-ethylhexanoate in 45 g 2-butanone is added over the cause of 3.5 hours. 15 minutes after starting the feed a second feed of styrene (165 g), butyl methacrylate (62 g), acrylic acid (110 g), methyl methacrylate (98 g) and butyl acrylate (22 g) is started over the cause of 3 h. The temperature is maintained for another 5 hours after completion of the addition feeds. The reaction is cooled to 60 °C. A mixture of 46 g N,N-dimethylethanolamine in 1200 g water is added over the course of 30 min and stirring is continued for another 30 min. 2-butanone is removed from the mixture under reduced pressure at 75°C until gas chromatographic analysis shows a level below 0.3% remaining 2-butanone.

The resulting carboxylic group containing poly(meth)acrylate obtained is found in Table 1 and denoted as A3.

### Preparation of an Aqueous Carboxylic Group Containing Poly(meth)acrylate (A4)

A 5-Liter stainless steel reactor equipped with a reflux condenser and an overhead stirrer is charged with 800 g butoxyethanol. The solvent is heated to 120 °C and a feed of 77 g tert-butylperoxy-2-ethylhexanoate in 77 g butoxyethanol is added over the cause of 4.5 hours. 15 minutes after starting the feed a second feed of styrene (150 g), 2-ethylhexylmethacrylate (310 g), methacrylic acid (450 g), methyl methacrylate (290 g) and butyl methacrylate (340 g) is started over the cause of 4 h. The temperature is maintained for another hour after completion of the addition feeds. The reaction is cooled to 100 °C and 1.6 kg of the resin is removed. The remaining resin is cooled further to 60 °C and a mixture of 120 g N,N-dimethylethanolamine in 1275 g water is added to reactor over the course of 60 min.

The resulting carboxylic group containing poly(meth)acrylate obtained is found in Table 1 and denoted as A4.

### Preparation of a Solvent-based (Conventional) Carboxylic Group Containing Poly(meth)acrylate A1C (Comparative Example)

A 5-Liter stainless steel reactor equipped with a reflux condenser and an overhead stirrer is charged with 600 g 2-butanone. The solvent is heated to 75 °C and a feed of 28 g tert-butylperoxy-2-ethylhexanoate in 25 g 2-butanone is added over the cause of 3.5 hours. 15 minutes after starting the feed a second feed of styrene (142 g), butyl acrylate (227 g), acrylic acid (43 g) and methyl methacrylate (160 g) is started over the cause of 3 h. The temperature is maintained for another 5 hours after completion of the addition feeds. The reaction is cooled to 60 °C and most of the solvent is removed at reduced pressure until a solid content of 90% is reached.

The resulting carboxylic group containing poly(meth)acrylate obtained is found in Table 1 and denoted as A1C.

**Table 1 Carboxyl-functional Poly(meth)acrylates (A)**

| **A** | **Monomer Composition in mol-%** | | | | | | | | **Acid number [mg KOH/g]** |
|---|---|---|---|---|---|---|---|---|---|
| | **MMA** | **n-BMA** | **n-BA** | **2-EHMA** | **2-EHA** | **MA** | **AA** | **Styrene** | |
| A1 | 20.76 | 9.27 | 3.62 | | | | 32.42 | 33.94 | 178.0 |
| A2 | 21.39 | 17.53 | | | 12.24 | 36.01 | | 10.83 | 181.5 |
| A3 | 20.76 | 9.27 | 3.62 | | | | 32.42 | 33.94 | 172.0 |
| A4 | 21.58 | 17.68 | | 11.49 | | 38.33 | | 10.92 | 205.7 |
| A1C | 29.29 | | 33.64 | | | | 11.22 | 25.85 | 59.5 |

| | | | | | | | | | |
|---|---|---|---|---|---|---|---|---|---|
| **MMA:** Methyl methacrylate; **n-BMA:** n-Butyl methacrylate; **2-EHMA:** 2-Ethylhexyl methacrylate; **MA:** Methacrylic acid; **AA:** Acrylic acid; **n-BA:** n-Butyl acrylate; **2-EHA:** 2-Ethylhexyl acrylate; **AN:** Acid number | | | | | | | | | |

It is to be emphasized that the acid number as used in the context of the present invention is the experimentally determined acid number (see details below), which may differ from theoretically determined acid numbers, because it may depend on variations in the manufacture process and/or variations in other process parameters used to produce the polymers.

### Solids Content (Solids, Nonvolatile Fraction)

The nonvolatile fraction is determined in accordance with DIN EN ISO 3251 (date: June 2008). This determination is accomplished by weighing out 1-2 g of sample into an aluminum dish dried beforehand and carrying out drying in a drying oven at 130°C for 60 minutes, followed by cooling in a desiccator, and then by reweighing. The residue, relative to the total amount of the sample employed, corresponds to the nonvolatile fraction. The volume of the nonvolatile fraction may be determined, if necessary, in accordance optionally with DIN 53219 (date: August 2009).

### Glass Transition Temperature

The glass transition temperature T_{g} in the context of the invention is determined experimentally in a method based on DIN 51005 "Thermal analysis (TA) - terms" and DIN 53765 "Thermal analysis - dynamic scanning calorimetry (DSC)". Here, a sample of 5 mg is weighed out into a sample boat and inserted into a DSC instrument. Cooling takes place to the start temperature, and subsequently 1st and 2nd measuring runs are carried out with inert gas purging (N₂) of 50 mL/min with a heating rate of 10 K/min, with cooling back down to the start temperature between the measuring runs. The measurement takes place customarily in the temperature range from about 50°C lower than the expected glass transition temperature to about 50°C higher than the glass transition temperature. The glass transition temperature in the context of the present invention and in accordance with DIN 53765, section 8.1, is that temperature in the 2nd measuring run at which half the change in the specific heat capacity is reached (0.5 delta cₚ). It is ascertained from the DSC diagram (plot of the heatflow against the temperature). It is the temperature which corresponds to the point of intersection at the center line between the extrapolated baselines before and after the glass transition with the measurement plot.

### Acid Number

The acid number is determined in accordance with DIN EN ISO 2114 (date: June 2002), using "method A". The acid number corresponds to the mass of potassium hydroxide in mg which is needed to neutralize 1 g of sample under the conditions specified in DIN EN ISO 2114. The stated acid number corresponds to the total acid number stated in the DIN standard, based on the solids content. The acid number is determined for the non-neutralized version of the polymers and therefore always states maximum acid content.

### Hydroxyl Number

The hydroxyl- or OH-number is determined in accordance with DIN 53240-2 (date: November 2007). In this method, the OH groups are reacted by acetylation with an excess of acetic anhydride. The excess acetic anhydride is subsequently cleaved by addition of water to form acetic acid, and the entire acetic acid is back-titrated with ethanolic KOH. The OH number indicates the amount of KOH in mg which is equivalent to the amount of acetic acid bound in the acetylation of 1 g of sample and is based here on the solids content.

### Determining the Number-average and Weight-average Molecular Weights

The number-average molecular weight (Mₙ) is determined by means of gel permeation chromatography (GPC) in accordance with DIN 55672-1 (date: August 2007). Besides the number-average molecular weight, this method may also be used to determine the weight-average molecular weight (M_{w}) and the polydispersity d (ratio of weight-average molecular weight (M_{w}) to number-average molecular weight (Mₙ)). Tetrahydrofuran is used as eluent. The determination is made against polymethyl methacrylate standards. The column material consists of styrene-divinylbenzene copolymers.

### Preparation of a Dibasic Ester-based beta-Hydroxyalkylamide Crosslinker (B)

A three-neck round-bottom flask, equipped with a distillation bridge and a nitrogen inlet was charged with 172 g dibasic ester (DBE; i.e., a mixture comprising approx. 23 wt.-% dimethyl succinate, approx. 60 wt.-% dimethyl glutarate and approx. 17 wt.-% dimethyl adipate). The mixture was heated to 90 °C and 228 g of N,N-diethanolamine were added in one portion under a flow of nitrogen. The temperature was raised in the range of approx. 110 °C to approx. 120 °C and the evolving methanol was collected. The temperature was maintained until the distillation of methanol ceased and subsequently raised to 150 °C. Distillation was maintained for further 3.5 hours, before the crosslinker B1 was cooled to room temperature (23 °C).

Following this procedure, further crosslinkers were synthesized (i.e., comparative crosslinkers B2* and B3*; and crosslinkers B4, B5 and B6 according to the invention).

To produce the other crosslinkers, DBE was replaced by the dicarboxylic acid ester in **Table 2** in an equimolar amount based on the number of ester groups.

**Table 2**

| Crosslinker (B) | Diester used to produce crosslinker (B) |
|---|---|
| B2 | Succinic acid dimethyl ester |
| B3 | Glutaric acid dimethyl ester |
| B4 | Adipic acid dimethyl ester |
| B1C | Malonic acid diethyl ester |
| B2C | Oxalic acid diethyl ester |

### Manufacture of Coating Compositions

To produce the coating compositions according to the present invention components A, B, S and LA were mixed homogeneously by use of an overhead laboratory stirrer with a 4-blade propeller stirrer (diameter 5 cm) for about 30 min at a speed of 1500 rpm.

**Table 3 Coating Compositions of Examples E1 to E6 and Comparative Examples C1 to C3**

| **Component** | **Examples** | | | | | | **Comparative Examples** | | |
|---|---|---|---|---|---|---|---|---|---|
| | **E1** | **E2** | **E3** | **E4** | **E5** | **E6** | **C1** | **C2** | **C3** |
| A1 | 32.37 | - | - | - | - | - | - | - | - |
| A2 | - | 23.25 | - | - | - | - | - | - | - |
| A3 | - | - | - | - | - | - | 33.18 | 33.29 | - |
| A4 | - | - | 23.04 | 23.51 | 23.43 | 23.36 | - | - | - |
| A1C | - | - | - | - | - | - | - | - | 38.71 |
| B1 | 9.75 | 7.17 | 6.87 | - | - | - | - | - | 3.89 |
| B2 | - | - | - | 6.44 | - | - | - | - | - |
| B3 | - | - | - | - | 6.75 | - | - | - | - |
| B4 | - | - | - | - | - | 7.03 | - | - | - |
| B5 | - | - | - | - | - | - | - | - | - |
| B1C | - | - | - | - | - | - | 9.70 | | - |
| B2C | - | - | - | - | - | - | - | 9.38 | - |
| S1 | 22.14 | - | - | - | - | - | 20.38 | 20.45 | 9.84 |
| S2 | 35.74 | - | 56.69 | 56.37 | 56.19 | 56.02 | 24.38 | 24.47 | 38.06 |
| S3 | - | 69.58 | - | - | - | - | - | - | - |
| S4 | - | - | - | - | - | - | 12.36 | 12.41 | - |
| S5 | - | - | - | - | - | - | - | - | 9.50 |
| S6 | - | - | 13.30 | 13.58 | 13.53 | 13.49 | - | - | - |
| LA | - | - | 0.1 | 0.1 | 0.1 | 0.1 | - | - | - |
| Sum | 100 | 100 | - | - | - | - | 100 | 100 | 100 |

| | | | | | | | | | |
|---|---|---|---|---|---|---|---|---|---|
| S1: butyl acetate; S2: butyl glycol; S3: water; S4: Solvent Naptha 160/180; S5: methyl ethyl ketone; S6: methoxy propanol; LA: levelling agent | | | | | | | | | |

### Application of the Coating Compositions

The coating compositions were applied by use of a 150-µm-doctor blade onto a Zn-phosphated steel test panel (Gardobond^{®} 26s/6800/OC available from Chemetall GmbH, Frankfurt, Germany) within 30 min after mixing the ingredients. The thus applied coating compositions were dried/cured for 20 minutes at the temperatures as indicated in table 4.

### Testing of the Cured Coating Compositions

### Gloss

Gloss provides an initial impression of the surface texture. The perception of gloss is more pronounced the more directionally the light is reflected. Clear, smooth coating films show a high gloss level, whereas rough, milky surfaces reflect the light more diffusely and thus have a lower gloss. The measured value is given in gloss units [GU], this value is related to a standard (black, polished glass panel as defined to show 100 GU). The corresponding measuring instrument (BYK Gardner micro-TRI-gloss) was calibrated before each series of measurements and measurements were carried out according to DIN EN ISO 2813:2015-02.

### Buchholz Hardness

The Buchholz hardness was determined based on the DIN EN ISO 2815:2003 standard as described in the following. The coated test panel is placed on a firm horizontal surface with the coating facing upwards. First, the feet of the testing instrument (BYK Gardner Buchholz Indentation Tester) were placed on the test panel. Then the indenter was carefully lowered, without tilting or moving sideways, until it touched the coated panel. The indenter was left, in this position, for 30±1 s, then the instrument was lifted off with the indenter first and then with the feet. Subsequently the light source and the microscope were set up and the length of the shadow caused by the indentation was measured in millimeters, 35±5 s after removing the indenter. The result is given, in millimeters, as the average of 3 measurements to the nearest 0.1 mm.

### Double-Rub Test

This test gives an impression of the chemical resistance of the film. A fabric strip was attached to the MEK hammer (methyl ethyl ketone hammer type "BASF Coatings"; 1350 g). The opening in the hammer was completely filled with MEK (methyl ethyl ketone) so that the fabric strip was soaked and the coating film was always wetted. The hammer was now pulled back and forth on the cured coating film (always at the same point and without pressure) until the cured coating film showed damage or reached a maximum of 200 double strokes (double rubs). The number of double strokes up to which no damage is visible was indicated.

**Table 4 - Test Results for E1 to E6 and C1 to C3 cured at 140 °C or 120 °C**

| **Examples** | **Tests** | | | | | |
|---|---|---|---|---|---|---|
| | **Gloss (60°)** | | **Buchholz Hardness Test (60 min)** | | **Double-Rub Test (1 d)** | |
| | 140 °C | 120 °C | 140 °C | 120 °C | 140 °C | 120 °C |
| E1 | 101.3 | ND | ND | ND | >200 | ND |
| E2 | 98.6 | ND | 0.9 | ND | 200 | ND |
| E3 | 97.2 | 96.3 | 0.7 | 1.2 | >200 | 18 |
| E4 | 96.6 | 97.8 | 0.9 | 1.3 | >200 | 24 |
| E5 | 96.3 | 96.6 | 0.9 | 1.4 | >200 | 42 |
| E6 | 96.6 | 97.3 | 0.8 | 1.4 | >200 | 38 |
| C1 | 77.4 | ND | ND | ND | 102 | ND |
| C2 | 96.7 | ND | ND | ND | 45 | ND |
| C3 | 91.4 | ND | ND | ND | 13 | ND |

| | | | | | | |
|---|---|---|---|---|---|---|
| ND: not determined | | | | | | |

The above data clearly show that the main aim of the present invention - namely to provide low-temperature crosslinkable coating compositions (i.e., coating compositions which show sufficient crosslinking already at 140 °C) without the use of aminoplast resins and isocyanate-based crosslinkers - is solved only if the combination of polymers (A) and crosslinkers (B) as claimed is used.

Comparative Coating Compositions C1 and C2 differ from the ones according to the present invention in that malonic acid diester and oxalic acid diester were used in the preparation of the crosslinking agents. In malonic acid and oxalic acid - in terms of the definition in claim 1 - n is 1 and 0, respectively.

In Comparative Coating Composition C3 a crosslinking agent according to the invention - namely B1 - was used. However, the acid number of the carboxylic acid group containing poly(meth)acrylic polymer is too low.

## Claims

1. Use of a coating composition as basecoat composition and/or clearcoat composition in automotive coating, the coating composition comprising
(A) one or more carboxyl group containing poly(meth)acrylic polymers having an acid number in the range from 120 to 500 mg KOH/g, the acid number being calculated for the non-neutralized form of the one or more poly(meth)acrylic polymers, the one or more poly(meth)acrylic polymers optionally being at least partially neutralized; and
(B) one or more compounds of formula (I) 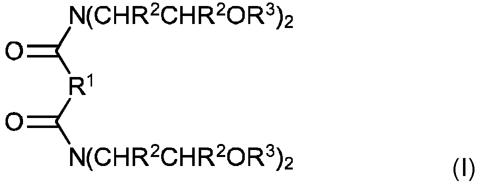 having on average at least 2 hydroxyl groups;
wherein
residues R¹ are independently of each other (CH₂)ₙ with n = 2, 3 or 4;
residues R² are independently of each other H or CH₃; and
residues R³ are independently of each other selected from H and (O=C)-R¹-(C=O)-R⁴, wherein residues R⁴ are independently of each selected from OH, OR^{a}, wherein R^{a} being a linear or branched alkyl group with 1 to 4 carbon atoms, and N(CHR²CHR²OH)₂.

2. Use of a coating composition according to claim 1, wherein the monomer mixture used to produce the carboxylic group containing poly(meth)acrylic polymers (A) comprises monomers having formula (M)
H_{2C}=CHR⁵_{-R}⁶ (M)
wherein
R⁵ stands for H or CH₃; and
some residues R⁶ stand for an aryl group with 6 to 12 carbon atoms, some residues R⁶ stand for a residue COOR⁷, wherein some residues R⁷ stand for H and some residues R⁷ stand for an alkyl group with 1 to 12 carbon atoms.

3. Use of a coating composition according to claim 1 or 2, wherein residues R³ in formula (I) are selected from the group of residues consisting of H, (O=C)-R¹-(C=O)-N(CH₂CH₂OH)₂ and (O=C)-R¹-(C=O)-N(CH₂CH(CH₃)OH)₂.

4. Use of a coating composition according to one or more of the preceding claims, further comprising one or more liquid carrier media selected from the group consisting of water and organic solvents.

5. Use of a coating composition according to one or more of the preceding claims, further comprising one or more further components (C) selected from the group consisting of one or more further polymeric binders (C1), one or more coatings additives (C2) and one or more colorants (C3).

6. Use of a coating composition according to one or more of the preceding claims, wherein
(A) the amount of the one or more carboxylic group containing poly(meth)acrylic polymers ranges from 12 to 37 wt.-%; and
(B) the amount of the one or more compounds of formula (I) ranges from 3 to 12 wt.-%; the weight percentage values being based on the total weight of the coating composition.

7. Use of a coating composition according to one or more of the preceding claims, wherein the molar ratio of carboxyl groups contained in the (A) one or more carboxylic group containing poly(meth)acrylic polymers to the hydroxyl groups in the (B) one or more compounds of formula (I) is preferably in the range from 1.5:1 to 1:1.25.

8. Multilayer coating, consisting of at least two coating layers, at least one of which is formed from a coating composition as defined in one or more of claims 1 to 7.

9. Multilayer coating according to claim 8, comprising at least one pigment and/or filler containing layer selected from the group consisting of a primer coat layer, a filler coat layer and a base coat layer; and comprising at least one clear coat layer.

10. Multilayer coating according to claim 9, wherein the basecoat layer and/or the clearcoat layer, is formed from a coating composition as defined in one or more of claims 1 to 7.

11. Multilayer coating according to any one of claims 9 or 10, comprising at least one filler coat layer, coated with at least one base coat layer and the at least one basecoat layer is coated with at least one clear coat layer.

12. Multilayer coating according to any one of claims 8 to 11, comprising an electro coat layer, at least one filler coat layer on top of the electro coat layer, coated with at least one base coat layer, which is coated with at least one clear coat layer, wherein the at least one basecoat layer and/or the at least one clearcoat layer is formed from a coating composition as defined in one or more of claims 1 to 7.

13. Multilayer coated substrate, comprising a multilayer coating as defined in any one of claims 8 to 12.

14. Multilayer coated substrate according to claim 13, wherein the substrate is a body of means of transportation.

## Patentansprüche

1. Verwendung einer Beschichtungszusammensetzung als Basislackzusammensetzung und/oder Klarlackzusammensetzung bei der Automobillackierung, wobei die Beschichtungszusammensetzung Folgendes umfasst:
(A) ein oder mehrere carboxylgruppenhaltige Poly(meth)acrylpolymere mit einer Säurezahl im Bereich von 120 bis 500 mg KOH/g, wobei die Säurezahl für die nicht neutralisierte Form des einen oder der mehreren Poly(meth)acrylpolymere berechnet wird, wobei das eine oder die mehreren Poly(meth)acrylpolymere gegebenenfalls zumindest teilweise neutralisiert sind; und
(B) eine oder mehrere Verbindungen der Formel (I) 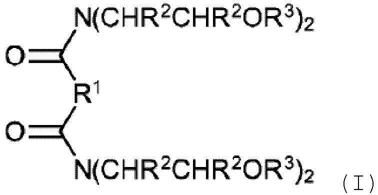 mit durchschnittlich mindestens 2 Hydroxylgruppen;
wobei
Reste R¹ unabhängig voneinander für (CH₂)ₙ mit n = 2, 3 oder 4 stehen;
Reste R² unabhängig voneinander für H oder CH₃ stehen; und
Reste R³ unabhängig voneinander aus H und (O=C)-R¹-(C=O)-R⁴ ausgewählt sind, wobei Reste R⁴ unabhängig voneinander aus OH, OR^{a}, wobei R^{a} für eine lineare oder verzweigte Alkylgruppe mit 1 bis 4 Kohlenstoffatomen steht, und N(CHR²CHR²OH)₂ ausgewählt sind.

2. Verwendung einer Beschichtungszusammensetzung nach Anspruch 1, wobei die zur Herstellung der carboxylgruppenhaltigen Poly(meth)acrylpolymere (A) verwendete Monomerenmischung Monomere der Formel (M) umfasst:
H₂C=CHR⁵-R⁶ (M)
wobei
R⁵ für H oder CH₃ steht; und
einige Reste R⁶ für eine Arylgruppe mit 6 bis 12 Kohlenstoffatomen stehen, einige Reste R⁶ für einen Rest COOR⁷ stehen, wobei einige Reste R⁷ für H stehen und
einige Reste R⁷ für eine Alkylgruppe mit 1 bis 12 Kohlenstoffatomen stehen.

3. Verwendung einer Beschichtungszusammensetzung nach Anspruch 1 oder 2, wobei Reste R³ in Formel (I) aus der Gruppe von Resten bestehend aus H, (O=C)-R¹-(C=O)-N(CH₂CH₂OH)₂ und (O=C)-R¹-(C=O)-N(CH₂CH(CH₃)OH)₂ ausgewählt sind.

4. Verwendung einer Beschichtungszusammensetzung nach einem oder mehreren der vorhergehenden Ansprüche, ferner umfassend ein oder mehrere flüssige Trägermedien, die aus der Gruppe bestehend aus Wasser und organischen Lösungsmitteln ausgewählt sind.

5. Verwendung einer Beschichtungszusammensetzung nach einem oder mehreren der vorhergehenden Ansprüche, ferner umfassend eine oder mehrere weitere Komponenten (C), die aus der Gruppe bestehend aus einem oder mehreren weiteren polymeren Bindemitteln (C1), einem oder mehreren Beschichtungsadditiven (C2) und einem oder mehreren Farbmitteln (C3) ausgewählt sind.

6. Verwendung einer Beschichtungszusammensetzung nach einem oder mehreren der vorhergehenden Ansprüche, wobei
(A) die Menge des einen oder der mehreren carboxylgruppenhaltigen Poly(meth)acrylpolymere im Bereich von 12 bis 37 Gew.-% liegt; und
(B) die Menge der einen oder der mehreren Verbindungen der Formel (I) im Bereich von 3 bis 12 Gew.-% liegt, wobei sich die Gewichtsprozentwerte auf das Gesamtgewicht der Beschichtungszusammensetzung beziehen.

7. Verwendung einer Beschichtungszusammensetzung nach einem oder mehreren der vorhergehenden Ansprüche, wobei das molare Verhältnis der in (A) dem einen oder den mehreren carboxylgruppenhaltigen Poly(meth)acrylpolymeren enthaltenen Carboxylgruppen zu den Hydroxylgruppen in (B) der einen oder den mehreren Verbindungen der Formel (I) vorzugsweise im Bereich von 1,5:1 bis 1:1,25 liegt.

8. Mehrschichtige Beschichtung, bestehend aus mindestens zwei Beschichtungsschichten, von denen mindestens eine aus einer Beschichtungszusammensetzung gemäß einem oder mehreren der Ansprüche 1 bis 7 gebildet ist.

9. Mehrschichtige Beschichtung nach Anspruch 8, umfassend mindestens eine pigment- und/oder füllstoffhaltige Schicht, die aus der Gruppe bestehend aus einer Grundierungslackschicht, einer Füllerlackschicht und einer Basislackschicht ausgewählt ist; und umfassend mindestens eine Klarlackschicht.

10. Mehrschichtige Beschichtung nach Anspruch 9, wobei die Basislackschicht und/oder die Klarlackschicht aus einer Beschichtungszusammensetzung gemäß einem oder mehreren der Ansprüche 1 bis 7 gebildet ist.

11. Mehrschichtige Beschichtung nach einem der Ansprüche 9 oder 10, umfassend mindestens eine mit mindestens einer Basislackschicht beschichtete Füllerlackschicht, wobei die mindestens eine Basislackschicht mit mindestens einer Klarlackschicht beschichtet ist.

12. Mehrschichtige Beschichtung nach einem der Ansprüche 8 bis 11, umfassend eine Elektrotauchlackschicht, mindestens eine Füllerlackschicht auf der Elektrotauchlackschicht, die mit mindestens einer Basislackschicht beschichtet ist, die mit mindestens einer Klarlackschicht beschichtet ist, wobei die mindestens eine Basislackschicht und/oder die mindestens eine Klarlackschicht aus einer Beschichtungszusammensetzung gemäß einem oder mehreren der Ansprüche 1 bis 7 gebildet ist.

13. Mehrschichtig beschichtetes Substrat, umfassend eine mehrschichtige Beschichtung gemäß einem der Ansprüche 8 bis 12.

14. Mehrschichtig beschichtetes Substrat nach Anspruch 13, wobei es sich bei dem Substrat um eine Karosserie eines Fortbewegungsmittels handelt.

## Revendications

1. Utilisation d'une composition de revêtement comme composition de revêtement de base et/ou composition de revêtement transparent dans un revêtement pour automobile, la composition de revêtement comprenant
(A) un ou plusieurs polymères poly(méth)acryliques contenant un groupe carboxyle ayant un indice d'acide dans la plage de 120 à 500 mg de KOH/g, l'indice d'acide étant calculé pour la forme non neutralisée du ou des polymères poly(méth)acryliques, le ou les polymères poly(méth)acryliques étant éventuellement au moins partiellement neutralisés ; et
(B) un ou plusieurs composés de formule (I) 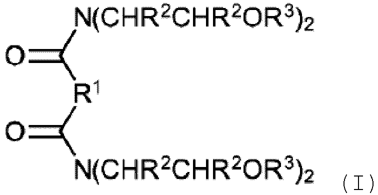 ayant en moyenne au moins 2 groupes hydroxyle ;
les radicaux R¹ étant indépendamment les uns des autres (CH₂)ₙ avec n = 2, 3 ou 4 ;
les radicaux R² étant indépendamment les uns des autres H ou CH₃ ; et
les radicaux R³ étant indépendamment les uns des autres choisis parmi H et (O=C)-R¹-(C=O)-R⁴,les radicaux R⁴ étant indépendamment les uns des autres choisis parmi OH, OR^{a}, R^{a} étant un groupe alkyle linéaire ou ramifié ayant 1 à 4 atomes de carbone, et N(CHR²/CHR²OH)₂.

2. Utilisation d'une composition de revêtement selon la revendication 1, le mélange de monomères utilisé pour produire les polymères poly(méth)acryliques contenant un groupe carboxyle (A) comprenant des monomères ayant la formule (M)
H₂C=CHR⁵-R⁶ (M)
R⁵ représentant H ou CH₃ ; et
certains radicaux R⁶ représentant un groupe aryle ayant 6 à 12 atomes de carbone, certains radicaux R⁶ représentant un radical COOR⁷, certains radicaux R⁷ représentant H et certains radicaux R⁷ représentant un groupe alkyle ayant 1 à 12 atomes de carbone.

3. Utilisation d'une composition de revêtement selon la revendication 1 ou 2, les radicaux R³ dans la formule (I) étant choisis dans le groupe de radicaux constitué par H, (O=C)-R¹-(C=O)-N(CH₂CH₂OH)₂ et (O=C)-R¹-(C=O)-N(CH₂CH(CH₃)OH)₂.

4. Utilisation d'une composition de revêtement selon une ou plusieurs des revendications précédentes, comprenant en outre un ou plusieurs milieux de support liquides choisis dans le groupe constitué par l'eau et les solvants organiques.

5. Utilisation d'une composition de revêtement selon une ou plusieurs des revendications précédentes, comprenant en outre un ou plusieurs autres composants (C) choisis dans le groupe constitué par un ou plusieurs autres liants polymériques (C1), un ou plusieurs additifs de revêtements (C2) et une ou plusieurs matières colorantes (C3).

6. Utilisation d'une composition de revêtement selon une ou plusieurs des revendications précédentes
(A) la quantité du ou des polymères poly(méth) acryliques contenant un groupe carboxylique se situant dans la plage de 12 à 37 % en poids ; et
(B) la quantité du ou des composés de formule (I) se situant dans la plage de 3 à 12 % en poids ; les valeurs en pourcentage en poids étant basées sur le poids total de la composition de revêtement.

7. Utilisation d'une composition de revêtement selon une ou plusieurs des revendications précédentes, le rapport molaire de groupes carboxyle contenus dans (A) le ou les polymères poly(méth) acryliques contenant un groupe carboxylique sur les groupes hydroxyle dans (B) le ou les composés de formule (I) étant de préférence dans la plage de 1,5:1 à 1:1,25.

8. Revêtement multicouche, constitué par au moins deux couches de revêtement, dont au moins une est formée à partir d'une composition de revêtement telle que définie dans une ou plusieurs des revendications 1 à 7.

9. Revêtement multicouche selon la revendication 8, comprenant au moins une couche contenant un pigment et/ou une charge choisie dans le groupe constitué par une couche de revêtement d'apprêt, une couche de revêtement de charge et une couche de revêtement de base ; et comprenant au moins une couche de revêtement transparent.

10. Revêtement multicouche selon la revendication 9, la couche de revêtement de base et/ou la couche de revêtement transparent étant formée à partir d'une composition de revêtement telle que définie dans une ou plusieurs des revendications 1 à 7.

11. Revêtement multicouche selon l'une quelconque des revendications 9 ou 10, comprenant au moins une couche de revêtement de charge, revêtue par au moins une couche de revêtement de base et l'au moins une couche de revêtement de base étant revêtue par au moins une couche de revêtement transparent.

12. Revêtement multicouche selon l'une quelconque des revendications 8 à 11, comprenant une couche de revêtement électrolytique, au moins une couche de revêtement de charge sur la couche de revêtement électrolytique, revêtue par au moins une couche de revêtement de base, qui est revêtue par au moins une couche de revêtement transparent, l'au moins une couche de revêtement de base et/ou l'au moins une couche de revêtement transparent étant formée à partir d'une composition de revêtement telle que définie dans une ou plusieurs des revendications 1 à 7.

13. Substrat revêtu multicouche, comprenant un revêtement multicouche tel que défini dans l'une quelconque des revendications 8 à 12.

14. Substrat revêtu multicouche selon la revendication 13, le substrat étant un corps de moyen de transport.
